# EUROPÄISCHE PATENTSCHRIFT

(11) **EP 1 599 768 B1**
(45) Veröffentlichungstag und Bekanntmachung des Hinweises auf die Patenterteilung: **10.10.2007**
(21) Anmeldenummer: 04709208.5
(22) Anmeldetag: 09.02.2004
(51) Int. Cl.: G05B 17/00

(54) **VERFAHREN UND VORRICHTUNG ZUR SIMULATION VON STOFF- UND WÄRMEÜBERGANGSKONTROLLIERTEN TRENNPROZESSEN**
METHOD AND DEVICE FOR SIMULATING SEPARATION PROCESSES CONTROLLED BY MASS TRANSFER AND HEAT TRANSFER
PROCEDE ET DISPOSITIF POUR SIMULER DES PROCESSUS DE SEPARATION CONTROLES PAR TRANSFERT DE MATIERE ET DE CHALEUR

(30) Priorität: 14.02.2003 DE 10307233
(43) Veröffentlichungstag der Anmeldung: 30.11.2005
(73) Patentinhaber: BASF Aktiengesellschaft, 67056 Ludwigshafen (DE)
(72) Erfinder: ASPRION, Norbert, 68163 Mannheim (DE); GROSSMANN, Christoph, The Woodlands, TX 77381 (US); HEGNER, Bernd, 67069 Ludwigshafen (DE); RUHNKE, Jürgen, 67125 Dannstadt-Schauernheim (DE); KATZ, Torsten, 67434 Neustadt (DE)
(74) Vertreter: Hössle Kudlek & Partner
(86) Internationale Anmeldenummer: PCT/EP2004/001162
(87) Internationale Veröffentlichungsnummer: WO 2004/072742

(56) Entgegenhaltungen:
- KENIG, E. Y.: "Multicomponent multiphase film-like systems: A modelling approach" COMPUTERS CHEM. ENGNG., Bd. 21, 1997, Seiten 355-360, XP001182102
- TAYLOR, R. ET AL.: "Film Models for Multicomponent Mass Transfer; Computational Methods: The Exact Solution of the Maxwell-Stefan Equations" COMPUTERS AND CHEMICAL ENGINEERING, Bd. 5, 1981, Seiten 61-73, XP001182103

## Beschreibung

Die vorliegende Erfindung betrifft ein Verfahren und eine Vorrichtung zur Simulation von stoff- und wärmeübergangskontrollierten Trennprozessen, insbesondere von Phasenübergängen mit chemisch-physikalischen Zusammenhängen zwischen mehreren Phasen, wie dies beispielsweise bei Mehrkomponententrennprozessen wie Extraktionen, Rektifikationen Absorptionen oder auch in Reaktoren der Fall ist. Die Erfindung findet insbesondere Anwendung im Bereich der Modellierung von Schüttungs- und Packungskolonnen.

Die Simulation des Stoff- und Wärmeaustauschs zwischen in Kontakt stehenden Phasen in chemisch-physikalischen Trennapparaten erfolgt üblicherweise durch Verschaltung von sogenannten "Gleichgewichtsstufen". Im Beispiel der Simulationsbeschreibung einer Destillationskolonne werden "Gleichgewichtsstufen" in Gegenstromverschaltung herangezogen, wobei in einer Gleichgewichtsstufe die ablaufenden Flüssigkeits- und Dampfströme im thermodynamischen Gleichgewicht stehen. Dabei handelt es sich um eine Modellvereinfachung, die in vielen Fällen zur Abbildung des realen Prozesses ausreichend genau ist, in bestimmten Fällen jedoch nicht angebracht ist. So führt die Anwendung derartiger Gleichgewichtsstufenkolonnen im allgemeinen bei der Simulation von beispielsweise Chemisorptionen und ähnlichen Prozessen zu falschen Ergebnissen.

Es ist bekannt, daß eine genauere und bessere Formulierung erreicht werden kann, wenn der Apparat mit einem Stoff- und Wärmeübergangsmodell beschrieben wird, bei dem die in Kontakt befindlichen Phasen nicht im thermodynamischen Gleichgewicht miteinander stehen, sondern kontrolliert und begrenzt Stoff und Energie austauschen. Beispiele für solche Modelle sind die Oberflächenerneuerungstheorie, die Penetrationstheorie oder aber auch die Zwei-Film-Theorie. Letztere stellt eine Standardmethode zur Beschreibung des Stoff- und Wärmeübergangs dar, in der die jeweiligen Phasen durch einen Kern und einen Film beschrieben sind, wobei Stoff und Wärme zwischen den Phasen durch den Film hindurch ausgetauscht werden. Lediglich an der Phasengrenze zwischen den jeweiligen Filmen herrscht ein thermodynamisches Gleichgewicht. Bei der Modellierung des Stoffaustausches zwischen Kern und Phasengrenze findet die Theorie von Stefan und Maxwell Anwendung, nach der die Stoffübergangsströme gekoppelt sind, d.h. die Stoffaustauschmengen der einzelnen Komponenten hängen auch von den anderen Komponenten ab.

Zur Beschreibung einer Multikomponentendiffusion ist insbesondere die Stefan-Maxwell-Gleichung geeignet. Durch sie wird der Einfluß der Diffusion mehrerer Komponenten einbezogen. Die Stefan-Maxwell-Gleichungen (bzw. Maxwell-Stefan equations) bilden ein nichtlineares, implizites Gleichungssystem mit speziellen Eigenschaften. Bei diesen Gleichungen handelt es sich um partielle Differentialgleichungen, wobei bei ν Komponenten lediglich ν-1 Gleichungen linear unabhängig sind. Für den Grenzfall unendlich großer Stoffaustauschflächen geht die Lösung des Gleichungssystems in das thermodynamische Gleichgewicht über, während für einfache Verhältnisse, beispielsweise äquimolaren Stoffaustausch, einfachere Modelle wie das Fick'sche Gesetz erhalten werden. Der für die Simulationspraxis bedeutsame theoretische Vorteil des Fick'schen Gesetzes liegt insbesondere darin, daß die Gleichungen in den übergehenden Stoffströmen explizit sind.

Ausgehend von den genannten Vereinfachungen sind die bekannten Verfahren zur Lösung des gekoppelten Stoff- und Wärmeübergangs derart aufgebaut, daß zur exakteren Beschreibung Korrekturen an den einfachen Gleichungen vorgenommen werden. Dies trifft insbesondere auf all diejenigen Modelle zu, mit denen Packungskolonnen simuliert und ausgelegt werden können.

Aus Higler et al. "Non equilibrium cell model for multi component (reactive) separation processes", AIChE Journal, November 1999, Vol. 45, No. 11, Seiten 2357 bis 2370, ist ein Verfahren mit einer impliziten Lösung der Stefan-Maxwell-Gleichungen bekannt, das sich jedoch auf die Modellierung einer Bodenkolonne, die durch Zusammensetzung mehrerer Modellblöcke beschrieben ist, beschränkt. Durch diese Verschaltung mehrerer Modellblöcke wird der speziellen Problematik einer nicht vollständigen Quervermischung auf einem Boden (einer Kolonne) Rechnung getragen.

Die bekannten Simulationsverfahren mit den sogenannten Gleichgewichtsapparaten versagen prinzipiell in allen technischen Vorrichtungen und Anwendungen, die stoffübergangslimitiert sind. Beispiele hierfür sind Destillationskolonnen (insbesondere in den Bereichen Reaktivdestillation und Destillation weitsiedender Gemische), Ab- und Desorptionskolonnen, Membrankontaktoren (beispielsweise als Ab- oder Desorptionskontaktor), Wäscher (Venturi oder Sprühwäscher), Verdampfer (beispielsweise Dünnschicht- und Kurzwegverdampfer zur Abtrennung von Monomeren aus Polymeren) und Kondensatoren (beispielsweise Kondensation aus einem Inertgasstrom) oder Mehrphasenreaktoren (Blasensäulen, Strahlschlaufen).

Aus Kenig "Multicomponent multiphase film-like systems: A modelling approach", Computers Chem. Engng., Bd. 21, Ergänzungen, 1997, Seiten 355 bis 360, XP001182102, ist ein Ansatz zur Modellierung von Mehrkomponentenmischungen-Trennvorgängen beschrieben, insbesondere die Modellierung eines stoff- und wärmeübergangskontrollierten Trennprozesses unter Verwendung des Kern-Film-Ansatzes. Die aus dem Ansatz über den Stefan-Maxwell-Gleichungen resultierenden partiellen Differentialgleichungen werden dabei numerisch (also diskretisiert) und iterativ unter Verwendung des Newton-Raphson-Verfahrens (für den hydrodynamischen Anteil) gelöst.

Ausgehend hiervon werden erfindungsgemäß ein Verfahren und eine Vorrichtung zur Simulation von stoff- und wärmeübergangskontrollierten Trennprozessen mit den Merkmalen des Anspruchs 1 bzw. des Anspruchs 16 vorgeschlagen. Demnach erfolgt die Simulation unter Verwendung eines an sich bekannten Kern-Film-Ansatzes zur Beschreibung eines an einer Phasengrenzfläche stattfindenden Stoff- und Wärmeaustauschs, wobei zur Lösung eines geeigneten Differentialgleichungssystems, insbesondere auf der Grundlage der Stefan-Maxwell-Gleichung, eine Diskretisierung eines betrachteten Übergangssegments des Kern-Film-Ansatzes vorgenommen wird. Eine erfindungsgemäße Vorrichtung ist insbesondere ein computergestützter Simulator. Des weiteren werden ein Computerprogramm mit Programmcode bzw. Programmcodemitteln und ein computerlesbares Datenträgermedium mit einem Computerprogramm mit den Merkmalen des Anspruchs 31 bzw. des Anspruchs 32 beansprucht.

Bei der Erfindung handelt es sich um die technische Implementierung einer Randwertaufgabe für ein partielles Differentialgleichungssystem, wobei eine der Integrationsvariablen die Höhenkoordinate des Apparats in Strömungsrichtung der einen Phase ist und die anderen Integrationsvariablen in Richtung des Stoff- und Wärmeaustauschs zwischen den jeweiligen Phasen zeigen.

Dieses Differentialgleichungssystem ist beispielsweise mittels eines adaptiven Verfahrens lösbar, wie es bei Diffusionsprozessen verwendet wird. Für die Berechnung von Prozessen in Gegenstrom-Stoffaustausch-Apparaten ist es jedoch besonders vorteilhaft, wenn Methoden verwendet werden, die auf ein Gleichungssystem führen, das in seiner Struktur den voranstehend genannten Gegenstrom-Gleichgewichts-Kolonnen entspricht. Das ist beispielsweise der Fall, wenn zur Lösung der Differentialgleichungen in Strömungsrichtung ein Differenzenverfahren verwendet wird, wie etwa das Euler-Verfahren (1. Ordnung) oder die Trapez-Regel (2. Ordnung) oder ein Verfahren höherer Ordnung (z.B. die Simpson-Regel). Durch diese Diskretisierung werden Elemente erhalten, die als Stoff- und Wärmeübergangs-Segmente bezeichnet werden können.

Diese Segmente enthalten ihrerseits partielle Differentialgleichungen bezüglich der Koordinaten in Richtung des Austauschs zwischen den verschiedenen Phasen. Vorteilhafterweise werden auch diese Differentialgleichungen mittels Differenzenverfahren gelöst. Durch diese Diskretisierung werden weitere Elemente erhalten, die erfindungsgemäß als Film-Segmente bezeichnet werden. Wie voranstehend erwähnt, resultieren in einfachen Fällen, wie bspw. äquimolarer Stoffaustausch zwischen nur zwei Phasen, gewöhnliche lineare Differentialgleichungen bezüglich der Richtung des Stoffaustauschs zwischen den beiden Phasen, die explizit in den übergehenden Stoffmengenströmen sind. In allen anderen Fällen handelt es sich um implizite Gleichungen bezüglich der übergehenden Stoffmengenströme.

Als Ergebnis dieses Verfahrens erhält man für jedes einzelne Segment und jedes einzelne Film-Segment nichtlineare Gleichungen. Das daraus resultierende nichtlineare Gleichungssystem wird iterativ gelöst, besonders vorteilhaft mit dem Newton-Verfahren. Variable sind dabei

| | |
|---|---|
| • für eine Kernphase: | Zusammensetzung |
| | Temperatur |
| | Mengenstrom |
| | Wärmeströme |
| • für ein Filmsegment: | Zusammensetzung |
| | Temperatur |
| | Stoffübergangsstrom |
| | Wärmeübergangsstrom |
| • für eine Phasengrenze: | Gleichgewichts-Zusammensetzung für jede Phase Gleichgewichts-Temperatur Stoffübergangsstrom Wärmeübergangsstrom |

Hinzu kommen ggf. Gleichungen, die Reaktionsumsätze beschreiben, oder bei Elektrolyt-Reaktionen Gleichungen zur Beschreibung der Elektroneutralität.

Die Erfindung ermöglicht über einen Differenzenansatz mittels Diskretisierung eine implizite Lösung eines Differentialgleichungssystems, insbesondere der Stefan-Maxwell-Gleichungen, ohne die Nachteile, die mit den aus dem Stand dem Technik bekannten Näherungen darstellenden Vereinfachungen verbunden sind.

Besonders interessant ist die Anwendung des Nicht-Gleichgewichtsansatzes der Erfindung für Apparate, in denen dem Stoffübergang chemische Reaktionen überlagert sind, wie dies beispielsweise bei Sauergaswäschen der Fall ist. Bei Sauergaswäschen handelt es sich um Chemisorptionen, bei denen saure Gase wie z.B. CO₂ H₂S , COS oder auch Merkaptane aus einem Trägergasstrom mit Hilfe eines flüssigen Absorptionsmittels entfernt werden. Anwendungen hierfür sind beispielsweise im Bereich der Erdgasreinigung, der Ammoniak- und Synthesegasreinigung sowie der Reinigung von Rauchgas und Verbrennungsabgasen zu finden. Bei schnellen Reaktionen kann es hier zu einer Verbesserung des Stoffübergangs im Filmsegment kommen, da durch eine Reaktion im Filmsegment die für den Stoffübergang entscheidende Potentialdifferenz erhöht werden kann. Das erfindungsgemäße Verfahren gewährleistet eine Berücksichtigung zusätzlicher den Stoffübergang beeinflussender Vorgänge wie schnelle chemische Reaktionen oder Elektroneutralität bei elektrolytischen Reaktionen. Die Erfindung ist ebenso geeignet, eine Modellierung von Apparaten mit beliebig vielen Phasen und unterschiedlichen Phasenkombinationen (z.B. Flüssig/Flüssig-Extraktionen, Dampf/Flüssig/Flüssig-Rektifikationen oder Fest/Flüssig-Reaktoren) durchzuführen.

In vorteilhafter Ausgestaltung umfaßt das erfindungsgemäße Verfahren die folgenden Schritte:
- Festlegen eines sich über eine Phasengrenze erstrekkenden Übergangsbereichs,
- Definieren mindestens zweier Kernphasen mit zugehörigen Filmen in dem Übergangsbereich,
- Diskretisieren der Kernphasen mit zugehörigen Filmen in Strömungsrichtung der Kernphasen in einzelne Übergangssegmente,
- iteratives Lösen des impliziten Differenzengleichungssystems.

In besonders vorteilhafter Ausgestaltung erfolgt ein zusätzliches Diskretisieren der Filme in Diffusionsrichtung. Dadurch wird eine sehr detailgetreue Simulation der Prozeßabläufe beim Stoffübergang über Phasengrenzen ermöglicht, wobei in den Kernphasen konvektiver Stoffaustausch und in den Filmen diffusiver Stoffaustausch vorherrscht.

In Ausgestaltung der Erfindung wird zum Abschätzen der Filmdicke für den Stoffübergang in dem Film die 2-Film-Theorie, die Penetrationstheorie oder die Oberflächenerneuerungstheorie verwendet. Es wird hierzu der Zusammenhang zwischen Stoffübergangskoeffizient, Diffusionskoeffizient und Filmdicke für den laminaren Film herangezogen. Die Stoffübergangskoeffizienten können z.B. für Schüttungs-, Packungs- oder Bodenkolonnen nach in der Literatur bekannten Korrelationen bestimmt werden. Eine Korrelation dieser Art ist beispielsweise beschrieben in: Onda, K., Takeuchi, H., und Okumoto, Y., "Mass Transfer Coefficients between Gas and Liquid Phases in Packed Columns," J. Chem. Eng., Japan, 1, (1968) Seite 56. Die Diffusionskoeffizienten können über in der Literatur bekannte Gleichungen wie z.B. von Wilke-Chang oder Nernst bestimmt werden. Im Rahmen der Modellierung eines Prozesses ist die Kenntnis der effektiven zum Stoffaustausch (zwischen den Phasen) zur Verfügung stehenden Fläche relevant.

In weiterer Ausgestaltung der Erfindung kann auch die effektive Stoffaustauschfläche mittels Korrelationen ermittelt werden. Häufig wird bei den Stoffübergangskorrelationen neben den Korrelationen für den Stoffübergangskoeffizienten auch eine Korrelation für die effektive Stoffaustauschfläche angegeben (vgl. bspw. Onda et al. 1968)

Selbstverständlich ist es mit der Erfindung möglich, sowohl stationäre als auch dynamische Prozesse zu betrachten, indem je nach dem gewünschten Lösungsansatz ein zeitabhängiger Ansatz in das Gleichungssystem aufgenommen wird und die vorhandenen Variablen zeitabhängig angesetzt werden. Die Aufnahme einer Zeitabhängigkeit ermöglicht dann eine Simulation eines zeitlichen Verlaufes bei Störungen in einem Nicht-Gleichgewichts-Apparat. Ohne. Zeitabhängigkeit wird eine Aussage über den Endzustand nach einer Störung erhalten.

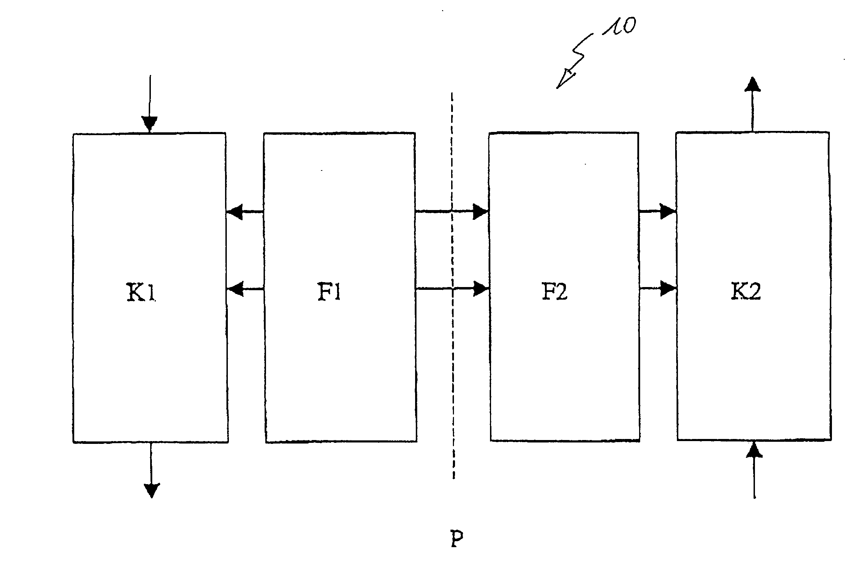

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.

Die einzige Figur zeigt in stark schematischer Darstellung einen erfindungsgemäßen Übergangsbereich. Dieser Übergangsbereich 10 erstreckt sich über eine Phasengrenze P, die zwei Phasen voneinander trennt. Dabei kann es sich um einen vergleichsweise einfachen Fall wie eine Flüssig/Dampf-Phasengrenze handeln, aber auch um andere Kombinationen, wie sie voranstehend erwähnt sind.

In dem Übergangsbereich 10 sind beiderseits der Phasengrenze P jeweils eine Kernphase K1 bzw. K2 und ein der jeweiligen Kernphase K1, K2 zugeordnetes und jeweils an die Phasengrenze P angrenzendes Filmsegment F1 und F2 definiert. Darüber hinaus kann den Kernphasen eine beliebige Anzahl an Wärme- und Stoffströmen zugefügt oder abgezogen werden.

Dieser Übergangsbereich bildet die Grundlage für die Anwendung der originalen, d.h. impliziten Stefan-Maxwell-Gleichungen auf der Grundlage der sogenannten Zwei-Film-Theorie.

Erfindungsgemäß erfolgt zur Lösung der so erhaltenen Differentialgleichungen eine Diskretisierung des Übergangsbereichs in Übergangssegmente, d.h. deren Einteilung in Nicht-Gleichgewichts-Segmente in Strömungsrichtung der Kernphasen. Der Differenzengleichungssatz wird dann für alle dieser derart erhaltenen Übergangssegmente numerisch iterativ gelöst.

Als besonders vorteilhaft erweist es sich, auch eine Diskretisierung in den Filmsegmenten vorzunehmen, insbesondere in Fällen, in denen auch Reaktionen in den Filmsegmenten (wie beispielsweise bei Sauergaswäschen) auftreten.

Des weiteren erweist es sich als besonders vorteilhaft, die Diskretisierung in Strömungsrichtung der Kernphasen in unterschiedlichen Abständen vorzunehmen, und zwar in feinen Schritten in Bereichen mit großer Zustandsänderung und in groben Schritten in Bereichen kleiner Zustandsänderung. Die Filmdicken der Filme F1, F2 können wahlweise vorgegeben werden oder aus Korrelationen gemessener Stoffübergangskoeffizienten und Diffusionskoeffizienten ermittelt werden. Korrelationen können beispielsweise für Blasensäulen oder unterschiedliche Packungen wie strukturierte Packungen oder Füllkörper verwendet werden. Ebenso kann die effektive Stoffaustauschfläche über Korrelationen berechnet werden.

Als besonders vorteilhaft erweist sich bei der Diskretisierung der Filme, wenn die Diskretisierungspunkte oder sogenannten Stützstellen (also die Abstände der diskreten Einteilung) jeweils zur Kernphase und zur Phasengrenze hin dichter liegen, da dort im allgemeinen die stärksten Änderungen auftreten. Die Filmdicke wird auch zur Berechnung des "Hold-up" des Films für Reaktionen, d.h. des Volumens das im Film zur Reaktion zur Verfügung steht und somit für die Verweilzeit, herangezogen.

Der Wärmetransport über den Film kann wahlweise durch Berücksichtigung von Wärmeleitung im Film oder aber durch Verwendung eines Wärmeübergangskoeffizienten, der bspw. über die Chilton-Colburn-Analogie abgeschätzt werden kann, berechnet werden.

Mit der vorliegenden Erfindung wird eine einfache und effektive computergestützte Simulation von stoffübergangskontrollierten Trennprozessen ermöglicht, die bei vergleichsweise geringer Rechenintensität sehr genaue Ergebnisse liefert. Die Erfindung ist insbesondere zur Simulation der Prozesse in Kolonnen und zur Modellierung von Kolonnen, vor allem Schüttungs- und Packungskolonnen geeignet. Es können sowohl Absorptionen (Gas-/Flüssig-Phasen) als auch Extraktionen (Flüssig-/Flüssig-Phasen) und auch Mehrphasen problemlos simuliert und modelliert werden, wobei auch chemische Reaktionen (Gleichgewichtsreaktionen, kinetisch kontrollierte Reaktionen), die in den (Kern- und Film-)Phasen ablaufen, und somit Massen- und Energiebilanzen beeinflussen, berücksichtigt werden können.

## Patentansprüche

1. Verfahren zur Simulation von stoff- und wärmeübergangskontrollierten Trennprozessen unter Verwendung eines Kern-Film-Ansatzes zur Beschreibung eines an einer Phasengrenze (P) stattfindenden Austauschs, bei dem zur iterativen Lösung eines geeigneten impliziten Differentialgleichungssystems eine Diskretisierung eines betrachteten Übergangsbereichs (10) des Kern-Film-Ansatzes vorgenommen wird, wodurch sich ein Differenzengleichungssystem ergibt.

2. Verfahren nach Anspruch 1, mit den folgenden Schritten:
- Festlegen eines sich über einen Phasengrenze (P) erstreckenden Übergangsbereichs (10),
- Definieren mindestens zweier Kernphasen (K1, K2) mit zugehörigen Filmen (F1, F2) in dem Übergangsbereich (10),
- Diskretisieren der Kernphasen (K1, K2) mit den zugehörigen Filmen (F1, F2) in Strömungsrichtung der Kernphasen in einzelne Übergangssegmente,
- iteratives Lösen des impliziten Differenzengleichungssystems.

3. Verfahren nach Anspruch 1 oder 2, bei dem ein zusätzliches Diskretisieren der Filme (F1, F2) in Diffusionsrichtung erfolgt.

4. Verfahren nach Anspruch 2, bei dem eine Dicke der Filme (F1, F2), aus Korrelationen für den Stoffübergangskoeffizienten und für die Diffusionskoeffizienten bestimmt wird.

5. Verfahren nach Anspruch 2, bei dem zum Abschätzen der Filmdicke für den Stoffübergang in dem Film die 2-Film-Theorie, die Penetrationstheorie oder die Oberflächenerneuerungstheorie verwendet wird.

6. Verfahren nach einem der Ansprüche 1 bis 5, bei dem das Übergangssegment ein Stoff- und/oder Wärmeübergangssegment ist.

7. Verfahren nach einem der voranstehenden Ansprüche, bei dem das Differentialgleichungssystem die Stefan-Maxwell-Gleichungen enthält.

8. Verfahren nach einem der voranstehenden Ansprüche, bei dem die Diskretisierung in Strömungsrichtung und/oder Diffusionsrichtung in feinen Schritten bei großen Zustandsänderungen und in groben Schritten bei kleinen Zustandsänderungen erfolgt.

9. Verfahren nach einem der voranstehenden Ansprüche, bei dem zur Lösung des Differentialgleichungssystems ein Integrationsverfahren 1. Ordnung, bspw. das Euler-Verfahren, verwendet wird.

10. Verfahren nach einem der Ansprüche 1 bis 8, bei dem zur Lösung des Differentialgleichungssystems ein Integrationsverfahren 2. Ordnung, bspw. die Trapez-Regel, verwendet wird.

11. Verfahren nach einem der Ansprüche 1 bis 8, bei dem zur Lösung des Differentialgleichungssystems ein Integrationsverfahren n-ter Ordnung, bspw. die Simpson-Regel, verwendet wird.

12. Verfahren nach einem der voranstehenden Ansprüche, bei dem der Kern-Film-Ansatz die Zwei-Film-Theorie ist.

13. Verfahren nach einem der voranstehenden Ansprüche, bei dem Reaktionen in den Kern- und Filmphasen über Massen- und/oder Energiebilanzen berücksichtigt werden.

14. Verfahren nach einem der voranstehenden Ansprüche, bei dem zur iterativen Lösung des Differenzengleichungssystems das Newton-Verfahren verwendet wird.

15. Verfahren nach einem der voranstehenden Ansprüche, bei dem eine Stoffaustauschfläche mittels Korrelationen ermittelt wird.

16. Vorrichtung zur Simulation von stoff- und wärmeübergangskontrollierten Trennprozessen unter Verwendung eines Kern-Film-Ansatzes zur Beschreibung eines an einer Phasengrenze (P) stattfindenden Austauschs, mit einer Rechnereinheit, einer Eingabeeinheit und einer Anzeigeeinheit, wobei eine iterative Lösung eines sich aus einem geeigneten impliziten Differentialgleichungssystem auf der Grundlage einer Diskretisierung eines betrachteten Übergangsbereichs (10) des Kern-Film-Ansatzes ergebenden Differenzengleichungssystems erfolgt.

17. Vorrichtung nach Anspruch 16, bei der ein Festlegen eines sich über einen Phasengrenze (P) erstreckenden Übergangsbereichs (10), ein Definieren mindestens zweier Kernphasen (K1, K2) mit zugehörigen Filmen (F1, F2) in dem Übergangsbereich (10), ein Diskretisieren der Kernphasen (K1, K2) mit den zugehörigen Filmen (F1, F2) in Strömungsrichtung der Kernphasen in einzelne Übergangssegmente, und ein iteratives Lösen des impliziten Differenzengleichungssystems erfolgt.

18. Vorrichtung nach Anspruch 16 oder 17, bei der ein zusätzliches Diskretisieren der Filme (F1, F2) in Diffusionsrichtung erfolgt.

19. Vorrichtung nach Anspruch 17, bei der eine Dicke der Filme (F1, F2), aus Korrelationen für den Stoffübergangskoeffizienten und für die Diffusionskoeffizienten bestimmt wird.

20. Vorrichtung nach Anspruch 17, bei der zum Abschätzen der Filmdicke für den Stoffübergang in dem Film die 2-Film-Theorie, die Penetrationstheorie oder die Oberflächenerneuerungstheorie verwendet wird.

21. Vorrichtung nach einem der Ansprüche 16 bis 20, bei der das Übergangssegment ein Stoff- und/oder Wärmeübergangssegment ist.

22. Vorrichtung nach einem der Ansprüche 16 bis 21, bei der das Differentialgleichungssystem die Stefan-Maxwell-Gleichungen enthält.

23. Vorrichtung nach einem der Ansprüche 16 bis 22, bei der die Diskretisierung in Strömungsrichtung und/oder Diffusionsrichtung in feinen Schritten bei großen Zustandsänderungen und in groben Schritten bei kleinen Zustandsänderungen erfolgt.

24. Vorrichtung nach einem der Ansprüche 16 bis 23, bei der zur Lösung des Differentialgleichungssystems ein Integrationsverfahren 1. Ordnung, bspw. das Euler-Verfahren, verwendet wird.

25. Vorrichtung nach einem der Ansprüche 16 bis 23, bei der zur Lösung des Differentialgleichungssystems ein Integrationsverfahren 2. Ordnung, bspw. die Trapez-Regel, verwendet wird.

26. Vorrichtung nach einem der Ansprüche 16 bis 23, bei der zur Lösung des Differentialgleichungssystems ein Integrationsverfahren n-ter Ordnung, bspw. die Simpson-Regel, verwendet wird.

27. Vorrichtung nach einem der Ansprüche 16 bis 26, bei der der Kern-Film-Ansatz die Zwei-Film-Theorie ist.

28. Vorrichtung nach einem der Ansprüche 16 bis 27, bei der Reaktionen in den Kern- und Filmphasen über Massen- und/oder Energiebilanzen berücksichtigt werden.

29. Vorrichtung nach einem der Ansprüche 16 bis 28, bei der zur iterativen Lösung des Differenzengleichungssystems das Newton-Verfahren verwendet wird.

30. Vorrichtung nach einem der Ansprüche 16 bis 29, bei der eine Stoffaustauschfläche mittels Korrelationen ermittelt wird.

31. Computerprogramm mit Programmcode, der bei Ablauf des Computerprogramms auf einem geeigneten Rechnersystem ein Verfahren nach einem der Ansprüche 1 bis 15 ausführt.

32. Computerprogrammprodukt mit Programmcode, der bei Ablauf des Computerprogramms auf einem geeigneten Rechnersystem ein Verfahren nach einem der Ansprüche 1 bis 15 ausführt.

33. Computerlesbares Datenträgermedium mit einem darauf gespeicherten Computerprogramm, wobei das Computerprogramm Programmcodemittel umfaßt, die bei Ablauf des Computerprogramms auf einem geeigneten Rechnersystem ein Verfahren nach einem der Ansprüche 1 bis 15 ausführen.

## Claims

1. A method for simulating mass and heat transfer-controlled separation processes using a core-film approach to describe an exchange taking place at a phase boundary (P) in which, for iteratively solving a suitable implicit differential equation system, discretisation of a transfer region (10) of the core-film approach under consideration is carried out, thereby resulting in a difference equation system.

2. The method according to claim 1 comprising the following steps:
- determining a transfer region (10) extending over a phase boundary (P),
- defining at least two core phases (K1, K2) including associated films (F1, F2) in the transfer region (10),
- discretising the core phases (K1, K2) together with the associated films (F1, F2) in the direction of flow of the core phases into individual transfer segments,
- iteratively solving the implicit difference equation system.

3. The method according to claim 1 or 2, wherein additional discretising of the films (F1, F2) is carried out in the direction of diffusion.

4. The method according to claim 2, wherein a thickness of the films (F1, F2) is determined from correlations for the mass-transfer coefficient and for the diffusion coefficient.

5. The method according to claim 2, wherein the two-film theory, penetration theory or surface renewal theory is used to estimate the film thickness for mass transfer in the film.

6. The method according to any one of claims 1 to 5, wherein the transfer segment is a mass and/or heat transfer segment.

7. The method according to any one of the preceding claims, wherein the differential equation system contains the Stefan-Maxwell equations.

8. The method according to any one of the preceding claims, wherein the discretisation is carried out in the direction of flow and/or the direction of diffusion in fine steps, for major changes of state, and in large steps, for minor changes of state.

9. The method according to any one of the preceding claims, wherein the differential equation system is solved using an integration method of the first order, for example the Euler method.

10. The method according to any one of claims 1 to 8, wherein, in order to solve the differential equation system, an integration method of the second order, for example the Trapezium Rule, is used.

11. The method according to any one of claims 1 to 8, wherein in order to solve the differential equation system, an integration method of the n^{th} order, for example the Simpson Rule, is used.

12. The method according to any one of the preceding claims, wherein the core-film approach is the two-film theory.

13. The method according to any one of the preceding claims, wherein reactions in the core and film phases are taken into consideration by means of mass and/or energy balances.

14. The method according to any one of the preceding claims, wherein the Newtonian method is used for iteratively solving the difference equation system.

15. The method according to any one of the preceding claims, wherein a mass-transfer area is determined by correlations.

16. An apparatus for simulating mass and heat transfer-controlled separation processes using a core film approach to describe an exchange taking place at a phase boundary (P), comprising a computer unit, an inputting unit and a display unit, wherein a difference equation system resulting from a suitable implicit differential equation system based on a discretisation of a transfer region (10) of the core-film approach under consideration is solved iteratively.

17. The apparatus according to claim 16, wherein a transfer region (10) extending over a phase boundary (P) is determined, at least two core phases (K1, K2) including associated films (F1, F2) in the transfer region (10) are defined, the core phases (K1, K2) are discretised together with the associated films (F1, F2) in the direction of flow of the core phases into individual transfer segments, and the implicit difference equation system is solved iteratively.

18. The apparatus according to claim 16 or 17, wherein additional discretising of the films (F1, F2) in the direction of diffusion is carried out.

19. The apparatus according to claim 17, wherein a thickness of the films (F1, F2) is determined from correlations for the mass-transfer coefficient and for the diffusion coefficients.

20. The apparatus according to claim 17, wherein the two-film theory, penetration theory or surface renewal theory is used to estimate the film thickness for the mass transfer in the film.

21. The apparatus according to any one of claims 16 to 20, wherein the transfer segment is a mass and/or heat transfer segment.

22. The apparatus according to any one of claims 16 to 21, wherein the differential equation system contains the Stefan-Maxwell equations.

23. The apparatus according to any one of claims 16 to 22, wherein the discretisation in the direction of flow and/or in the direction of diffusion is carried out in fine steps, for major changes of state, and in large steps, for minor changes of state.

24. The apparatus according to any one of claims 16 to 23, wherein an integration method of the first order, for example the Euler method, is used to solve the differential equation system.

25. The apparatus according to any one of claims 16 to 23, wherein an integration method of the second order, for example the Trapezium Rule, is used to solve the differential equation system.

26. The apparatus according to any one of claims 16 to 23, wherein an integration method of the n^{th} order, for example the Simpson Rule, is used to solve the differential equation system.

27. The apparatus according to any one of claims 16 to 26, wherein the core-film approach is the two-film theory.

28. The apparatus according to any one of claims 16 to 27, wherein reactions in the core and film phases are taken into consideration by means of mass and/or energy balances.

29. The apparatus according to any one of claims 16 to 28, wherein the Newtonian method is used for iteratively solving the difference equation system.

30. The apparatus according to any one of claims 16 to 29, wherein a mass-transfer area is determined by correlations.

31. A computer programme with programme code which performs a method according to any one of claims 1 to 15 when the computer programme is run on a suitable computer system.

32. A computer programme product with programme code which performs a method according to any one of claims 1 to 15 when the computer programme is run on a suitable computer system.

33. A computer readable data carrier medium with a computer programme stored thereon, the computer programme comprising programme code means which perform a method according to any one of claims 1 to 15 when the computer programme is run on a suitable computer system.

## Revendications

1. Procédé destiné à simuler des processus de séparation contrôlés par transfert de matière et de chaleur au moyen d'une approche noyau-film servant à décrire un échange se produisant au niveau d'une limite de phase (P), et consistant à réaliser une discrétisation d'une zone de transfert (10) considérée de l'approche noyau-film pour résoudre itérativement un système implicite d'équations différentielles approprié, cette opération donnant un système d'équations aux différences.

2. Procédé selon la revendication 1 comportant les étapes suivantes:
- déterminer une zone de transfert (10) s'étendant au-delà d'une limite de phase (P),
- définir au moins deux phases noyau (K1, K2) avec les films (F1, F2) correspondants dans la zone de transfert (10),
- discrétiser des phases noyau (K1, K2) avec les films (F1, F2) correspondants en segments de transfert dans le sens d'écoulement des phases noyau,
- résoudre itérativement le système implicite d'équations aux différences.

3. Procédé selon la revendication 1 ou 2, dans lequel une discrétisation supplémentaire des films (F1, F2) a lieu dans le sens de la diffusion.

4. Procédé selon la revendication 2, dans lequel une épaisseur des films (F1, F2) est déterminée à partir de corrélations pour le coefficient de transfert de matière et le coefficient de diffusion.

5. Procédé selon la revendication 2, dans lequel l'évaluation de l'épaisseur de film pour le transfert de matière dans le film fait appel à la théorie des deux films, à la théorie de la pénétration ou à la théorie du renouvellement de surface.

6. Procédé selon l'une des revendications 1 à 5, dans lequel le segment de transition est un segment de transfert de matière et/ou de chaleur.

7. Procédé selon l'une des revendications précédentes, dans lequel le système d'équations différentielles contient les équations de Stefan-Maxwell.

8. Procédé selon l'une des revendications précédentes, dans lequel la discrétisation a lieu dans le sens d'écoulement et/ou dans le sens de diffusion avec des pas de discrétisation fins pour des changements d'état importants et avec des pas de discrétisation grossiers pour les petits changements d'état.

9. Procédé selon l'une des revendications précédentes, dans lequel la résolution du système d'équations différentielles met en oeuvre une méthode d'intégration d'ordre 1, par ex. la méthode d'Euler.

10. Procédé selon l'une des revendications 1 à 8, dans lequel la résolution du système d'équations différentielles met en oeuvre une méthode d'intégration d'ordre 2, par ex. la règle du trapèze.

11. Procédé selon l'une des revendications 1 à 8, dans lequel la résolution du système d'équations différentielles met en oeuvre une méthode d'intégration d'ordre n, par ex. la règle de Simpson.

12. Procédé selon l'une des revendications précédentes, dans lequel l'approche noyau-film correspond à la théorie des deux films.

13. Procédé selon l'une des revendications précédentes, dans lequel des réactions dans les phases noyau et film sont prises en compte par l'intermédiaire de bilans massiques et/ou énergétiques.

14. Procédé selon l'une des revendications précédentes, dans lequel la résolution itérative du système d'équations aux différences met en oeuvre la méthode de Newton.

15. Procédé selon l'une des revendications précédentes, pour lequel une surface de transfert de matière est déterminée au moyen de corrélations.

16. Dispositif destiné à simuler des processus de séparation contrôlés approche transfert de matière et de chaleur au moyen d'une préparation noyau-film servant à décrire un échange se produisant au niveau d'une limite de phase (P),comportant une unité de calcul, une unité d'entrée et une unité d'affichage, une résolution itérative étant obtenue pour un système d'équations aux différences établi à partir d'un système implicite d'équations différentielles approprié sur la base d'une discrétisation d'une zone de transfert (10) considérée de l'approche noyau-film.

17. Dispositif selon la revendication 16, faisant intervenir une définition d'une zone de transfert (10) s'étendant au-delà d'une limite de phase (P), une définition d'au moins deux phases noyau (K1, K2) avec les films (F1, F2) correspondants dans la zone de transfert (10), une discrétisation en segments de transfert des phases noyau (K1, K2) avec les films (F1, F2) correspondants dans le sens d'écoulement des phases noyau, et une résolution itérative du système implicite d'équations aux différences.

18. Dispositif selon la revendication 16 ou 17, dans lequel une discrétisation supplémentaire des films (F1, F2) a lieu dans le sens de la diffusion.

19. Dispositif selon la revendication 17, dans lequel une épaisseur des films (F1, F2) est déterminée à partir de corrélations pour le coefficient de transfert de matière et le coefficient de diffusion.

20. Dispositif selon la revendication 17, dans lequel l'évaluation de l'épaisseur de film pour le transfert de matière dans le film fait appel à la théorie des deux films, à la théorie de la pénétration ou à la théorie du renouvellement de surface.

21. Dispositif selon l'une des revendications 16 à 20, dans lequel le segment de transition est un segment de transfert de matière et/ou de chaleur.

22. Dispositif selon l'une des revendications 16 à 21, dans lequel le système d'équations différentielles contient les équations de Stefan-Maxwell.

23. Dispositif selon l'une des revendications 16 à 22, dans lequel la discrétisation a lieu dans le sens d'écoulement et/ou dans le sens de diffusion avec des pas de discrétisation fins pour des changements d'état importants et avec des pas de discrétisation grossiers pour les petits changements d'état.

24. Dispositif selon l'une des revendications 16 à 23, dans lequel la résolution du système d'équations différentielles met en oeuvre une méthode d'intégration d'ordre 1, par ex. la méthode d'Euler.

25. Dispositif selon l'une des revendications 16 à 23, dans lequel la résolution du système d'équations différentielles met en oeuvre une méthode d'intégration d'ordre 2, par ex. la règle du trapèze.

26. Dispositif selon l'une des revendications 16 à 23, dans lequel la résolution du système d'équations différentielles met en oeuvre une méthode d'intégration d'ordre n, par ex. la règle de Simpson.

27. Dispositif selon l'une des revendications 16 bis 26, dans lequel l'approche noyau-film correspond à la théorie des deux films.

28. Dispositif selon l'une des revendications 16 à 27, dans lequel des réactions dans les phases noyau et film sont prises en compte par l'intermédiaire de bilans massiques et/ou énergétiques.

29. Dispositif selon l'une des revendications 16 à 28, dans lequel la résolution itérative du système d'équations aux différences met en oeuvre la méthode de Newton.

30. Dispositif selon l'une des revendications 16 à 29, dans lequel une surface de transfert de matière est déterminée au moyen de corrélations.

31. Programme d'ordinateur comportant un code qui, lors du déroulement du programme sur un système informatique approprié, exécute un procédé selon l'une des revendications 1 à 15.

32. Produit doté d'un programme d'ordinateur comportant un code qui, lors du déroulement du programme sur un système informatique approprié, exécute un procédé selon l'une des revendications 1 à 15.

33. Support de données pouvant être lu par un ordinateur et sur lequel est enregistré un programme d'ordinateur, ledit programme comportant des moyens de code qui, lors du déroulement du programme sur un système informatique approprié, exécutent un procédé selon l'une des revendications 1 à 15.
